# EUROPEAN PATENT APPLICATION

(11) **EP 4 495 758 A1**
(43) Date of publication of application: **22.01.2025**
(21) Application number: 24185317.5
(22) Date of filing: 28.06.2024
(51) Int. Cl.: G06F 8/30, G06N 20/00

(54) **SYSTEMS AND METHODS FOR AUTOMATED APPLICATION AND PLATFORM GENERATION USING LARGE LANGUAGE MODELS AND CONTEXT INFORMATION**

(30) Priority: 28.06.2023 US 202363510791 P; 27.06.2024 US 202418756180
(71) Applicant: JPMorgan Chase Bank, N.A., New York, NY 10179 (US)
(72) Inventor: MACIVER, Peter, New York, NY 10179 (US); BABBAR, Varun, New York, NY 10179 (US); MORAN, Sean, New York, NY 10179 (US)
(74) Representative: Patentanwälte Olbricht Buchhold Keulertz

(57) **Abstract**

In some aspects, the techniques described herein relate to a method including: receiving, at a generative platform, a project specification; determining, by the generative platform and based on the project specification, a set of tasks; executing each task in the set of tasks with a corresponding agent, wherein the executing includes: determining context information; receiving output from a general large language model; enhancing the output from the general large language model with the context information; and saving the output to an integrated development environment.

## Description

### RELATED APPLICATIONS

This application claims priority to, and the benefit of, U.S. Provisional Patent Application Ser. No. 63/510,791, filed June 28, 2023, the disclosure of which is hereby incorporated, by reference, in its entirety.

### BACKGROUND

### 1. Field of The Invention

Aspects generally relate to systems and methods for automated application and platform generation.

### 2. Description of the Related Art

Significant progress has been made in the field of generative machine learning (ML) models. Many of these models such as large language models (LLMs) are based on neural networks and deep learning models such as transformer-based models. For instance, generative pre-trained transformer models and platforms have been refined to the point where output is not only coherent but can address nuanced instructions. One such instruction is a request for generation of source code that accomplishes a particular task or builds all or part of a computer program. While models such as LLMs have become very efficient and accurate in generating output such as computer program source code, these models do not understand individual organizations' various policies, standards, and controls. Accordingly, source code received as output may be functional, but may not align with an organization's policies, standards, and controls. Moreover, code produced by ML models may not be aware of, and therefore not holistic with respect to, a global application context. These drawbacks may result in generated source code that is largely useless, unless there is a process for refining the generated source code in such a way that it is aligned with the receiving organization's policies, standards, and controls.

### SUMMARY

In some aspects, the techniques described herein relate to a method, system of a computer performing steps, or steps performed by a processor in connection with a non-transitory medium, the method or steps including: receiving, at a generative platform, a project specification; determining, by the generative platform and based on the project specification, a set of tasks; executing each task in the set of tasks with a corresponding agent, wherein the executing includes: determining context information; receiving output from a general large language model; enhancing the output from the general large language model with the context information; and saving the output to an integrated development environment.

In some aspects, the determining a set of tasks may comprise determining a requirement of the project specification; creating a database schema based on the project specification; creating a project structure and a dependency; creating a system interface; and deploying the system interface to a cloud platform.

In some aspects, the set of tasks can include one or more of a constraint, a command, a resource, a performance, an evaluation, and a response format. In some aspects, the identified task may be to create a persistent store and, in response, a persistent store agent creates the persistent store by generating one or more of a configuration, a software object, a service, and a deployment scheme.

In some aspects, the steps or method can comprise generating a domain classification scheme that isolates the execution of the set of tasks included in a domain class to a corresponding agent that only executes the domain class. In some aspects, a persistence agent is generated to create a persistence tier for the project. In some aspects, the corresponding agent can be generated with a context of a domain environment in which the corresponding agent operates and a requirement of the domain environment.

### BRIEF DESCRIPTION OF THE DRAWINGS

Figure 1 is a logical flow of a generative platform, in accordance with aspects.
Figure 2 is a logical flow of a generative platform, in accordance with aspects.
Figure 3 is a block diagram of a computing device for implementing certain aspects of the present disclosure.
Figure 4 is a block diagram of agents and agent dependencies, in accordance with aspects.
Figure 5 is a block diagram of a system for addition of context to generated source code.

### DETAILED DESCRIPTION

Aspects generally relate to systems and methods for automated application and platform generation.

When creating an application and/or designing a platform including infrastructure for an application to execute on, software engineers go through a tedious process of iterative refinement of ideas, working prototypes, and production fixes. This can involve a host of tasks and sub-tasks such as determining an application structure, determining relevant application programming interface (API) calls, defining security and authentication models and protocols, unit test generation, and assuring compliance with an organization's controls, to name only a few. Aspects may automate these and other development tasks by providing agents that are dedicated to a particular domain. Aspects may break down a programming problem into subtasks which may be solved by agents. A global context may be maintained while giving domain agents domain-specific knowledge they need to solve various defined subtasks.

Aspects may include a software platform that exposes an API and that is integrated with a user's integrated development environment (IDE). Aspects may generate source code for software projects that are compliant with a providing organization's best practices, standards, and/or controls.

In accordance with aspects, a generative platform may receive a project specification from a user. A project specification may set forth a project goal and may include a set of requirements for the project. A project specification may take a behavior-driven development (BDD) form. A BDD specification may be expressed in a domain specific language (DSL) using natural language that may express a project goal and any requirements for the project. For instance, a project specification may include an end-goal stated in terms of what a generated software application is expected to accomplish, a requested technology stack for generated application, and a deployment environment for the generated application.

An exemplary end goal as expressed in a project specification may be for a hotel reservation system. A technology stack may be expressed as Java^{™} source code generated in a Spring^{®} framework having an H2^{™} database engine and a Restful API. A deployment may specify a private cloud environment provided by the generating organization.

A generative platform may receive a project specification and may determine a set of tasks and subtasks that are required to be completed in order for the end goal to be completed in accordance with the requirements noted in the project specification. Tasks may include items such as "create a persistence tier," "create deployment scripts," "create initial code," "create an identity access management scheme," etc. Tasks may include technology and deployment determinations, such as whether a persistent store is needed, initial source code snippets (e.g., classes, getter methods, setter methods, pom.xml files, YAML (.yaml or .yml) files, etc.), deployment scripts for the noted deployment environment, an authorization and/or an authentication mechanism, etc.

The determined set of tasks may be returned to a platform user and the user may review the tasks. After review, a user may approve a task, deny a task, or edit a task (and then approve the edited task). The user may then submit the approvals, amendments, and denials back to the platform. Upon receipt of the reviewed tasks, the system may begin generating artifacts and environments necessary to complete a specified end goal. For instance, a task that will create a persistent store will proceed to create a configuration, software objects, services, a deployment scheme, etc.

Aspects may include a domain classification scheme that isolates the execution of specific tasks included in a domain class to a corresponding agent that is configured to execute only tasks classified in the particular corresponding domain class. A domain may define an organizations policies, standards, and controls with respect to its subject. For instance, a domain may define acceptable models, patterns, best practices, etc., of an organization and may further define classes for addressing recurring tasks in a predictable manner.

Tasks may be executed by corresponding agents. An agent may be a platform process that is configured to complete a task or subtask. Each task may be classified as included in a particular domain class. A corresponding agent may be configured to perform one or more tasks in a defined domain. That is, each agent may be configured to complete a particular, domain-specific task and any related subtasks that are closely related under a defined domain. Accordingly, a persistence agent may only be responsible for generating a persistence tier for a project. A deployment agent may only be responsible for generating deployment scripts for deployment to a suitable platform, and so on. An agent may include a machine learning (ML) model, such as a LLM. A model included in an agent may be trained with historic data and may help with aspects of task completion.

In accordance with aspects, an agent may be context aware. That is, an agent may be aware of the domain it is configured around, and the domain's requirements expressed as organizational policies, standards, controls, etc.

A generative platform may be configured with an agent communication topology that allows an agent to retrieve additional context and to communicate with other agents in order to retrieve needed information based on determined dependencies. An agent communication topology may include aspects of a fat controller model and/or an event-based model. For instance, project context may be received from an orchestration agent that is a centralized agent, or agents may communicate with each other in an ad hoc fashion. In an exemplary aspect, a persistence agent may be configured to be in operative communication with a deployment agent. A deployment agent may include some or all of a set of details that can provide context to, e.g., a persistence agent so that the persistence agent can create the correct artifacts for a given task/project. In some aspects, communication between a centralized orchestrator and ad hoc communication among agents may be facilitated.

Exemplary context and/or dependencies that an agent may be aware of due to its domain association or may be aware of due to communication with other agents include deployment environment, (e.g., will a persistent store be deployed to a public cloud or a private cloud; if public, which public cloud, etc.), will the persistent store be a relational database or some other type of persistent store, etc.

In accordance with aspects, an agent may interface with a general LLM and may provide input to the general LLM and receive output from the general LLM. A general LLM, as used herein, may be a LLM that is trained on massive amounts of data from, e.g., the internet, and that is available (publicly or privately) for general inquires. Exemplary general LLMs include ChatGPT from OpenAI^{™}. Agents may provide input to a general LLM in the form of a request for source code that accomplishes a task or subtask (or a part thereof). A general LLM may provide the requested source code back to the requesting agent. The requesting agent may then implement the code in its known context.

Source code may be generated and stored within a user's IDE application, so that the user may review the generated code. Initial source code files may include artifacts such as the initial software classes and objects within the classes. Generated software classes may include business logic classes, interface classes, concrete classes, etc.

In accordance with aspects, once initial code has been generated, a corresponding agent may enhance the generated code by executing enhancement tasks. Enhancement tasks may be tasks that can update initial code with context-specific additions. For instance, identity and access management functionality may be added to initial code in order to protect access to the generated program according to an organization's policies and standards. Other enhancement tasks include organization-specific implementations of authorization models, authentication models, access rules, API resource protection, making calls to subsidiary domains and/or relevant / internal APIs (e.g., knowledge bases, collaboration platforms, etc.), information retrieval using organizational cloud storage platforms, etc. Agents may extend generated artifacts as necessary in order to meet an organization's policies, standards, best practices, controls, etc., in an iterative process.

In accordance with aspects, a generative platform may allow a user to correct or amend provided output. Any corrections or amendments to provided output may be used to adjust and/or train models within a corresponding agent that produced the output. This training may be ongoing and iterative.

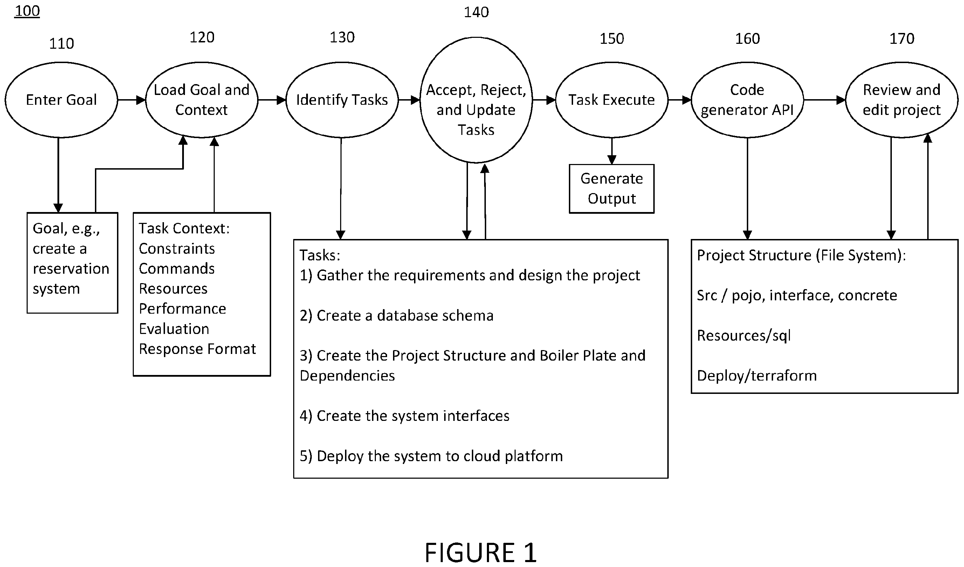

Figure 1 is a logical flow of a generative platform, in accordance with aspects.

The logical flow 100 can include step 110 of a user entering a goal, generally at a high level. As shown the goal could be creating a reservation system.

The model can then perform step 120 of retrieving a context related to the goal including constraints, commands, resources, performance, evaluation, and response format.

The model can then perform step 130 of identifying tasks based on the loaded goal and context. For identifying tasks, the model can be required to conduct one or more steps including (1) gathering the requirements and designing the project; (2) creating a database schema; (3) creating the project structure and boiler plate and dependencies; (4) creating the system interfaces; and (5) deploying the system to a cloud platform.

The model can then perform step 140 of accepting, rejecting, and updating a task or multiple tasks based on testing and generative adversarial network challenges and resulting edits to the task(s).

The model can then execute tasks 150 and generate an output of reporting executed tasks, showing executed tasks via a user interface, and sending an alert of an executed task.

The model can then implement a code generator API 160 to generate code associated with the tasks. The code may be implemented in a project structure associated with the goal.

In step 170, the model can review and edit the project structure based on testing and generative adversarial network challenges and resulting edits to the project.

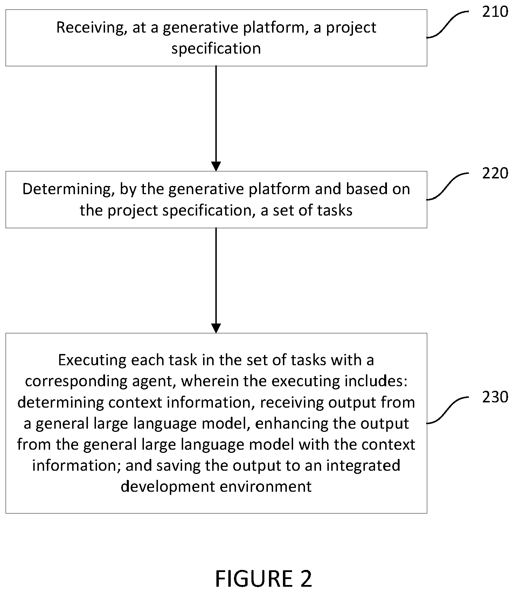

Figure 2 is a logical flow of a generative platform, in accordance with aspects.

Step 210 includes receiving, at a generative platform, a project specification.

Step 220 includes determining, by the generative platform and based on the project specification, a set of tasks.

Step 230 includes executing each task in the set of tasks with a corresponding agent, wherein the executing includes: determining context information, receiving output from a general large language model, enhancing the output from the general large language model with the context information; and saving the output to an integrated development environment.

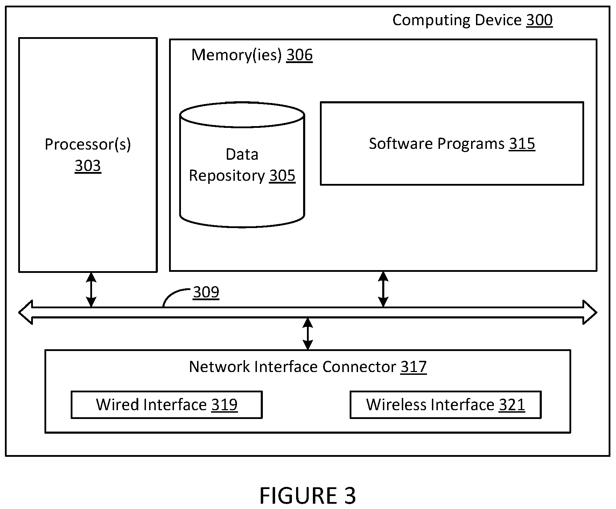

Figure 3 is a block diagram of a computing device for implementing certain aspects of the present disclosure. Figure 3 depicts exemplary computing device 300. Computing device 300 may represent hardware that executes the logic that drives the various system components described herein. For example, system components such as various software engines, a ML model engine, an interface, various database engines and database servers, and other computer applications and logic may include, and/or execute on, components and configurations like, or similar to, computing device 300.

Computing device 300 includes a processor 303 coupled to a memory 306. Memory 306 may include volatile memory and/or persistent memory. The processor 303 executes computer-executable program code stored in memory 306, such as software programs 315. Software programs 315 may include one or more of the logical steps disclosed herein as a programmatic instruction, which can be executed by processor 303. Memory 306 may also include data repository 305, which may be nonvolatile memory for data persistence. The processor 303 and the memory 306 may be coupled by a bus 309. In some examples, the bus 309 may also be coupled to one or more network interface connectors 317, such as wired network interface 319, and/or wireless network interface 321. Computing device 300 may also have user interface components, such as a screen for displaying graphical user interfaces and receiving input from the user, a mouse, a keyboard and/or other input/output components (not shown).

The various processing steps, logical steps, and/or data flows depicted in the figures and described in greater detail herein may be accomplished using some or all of the system components also described herein. In some implementations, the described logical steps may be performed in different sequences and various steps may be omitted. Additional steps may be performed along with some, or all of the steps shown in the depicted logical flow diagrams. Some steps may be performed simultaneously. Accordingly, the logical flows illustrated in the figures and described in greater detail herein are meant to be exemplary and, as such, should not be viewed as limiting. These logical flows may be implemented in the form of executable instructions stored on a machine-readable storage medium and executed by a processor and/or in the form of statically or dynamically programmed electronic circuitry.

The system of the invention or portions of the system of the invention may be in the form of a "processing machine" a "computing device," an "electronic device," a "mobile device," etc. These may be a computer, a computer server, a host machine, etc. As used herein, the term "processing machine," "computing device, "electronic device," or the like is to be understood to include at least one processor that uses at least one memory. The at least one memory stores a set of instructions. The instructions may be either permanently or temporarily stored in the memory or memories of the processing machine. The processor executes the instructions that are stored in the memory or memories in order to process data. The set of instructions may include various instructions that perform a particular step, steps, task, or tasks, such as those steps/tasks described above. Such a set of instructions for performing a particular task may be characterized herein as an application, computer application, program, software program, or simply software. In one aspect, the processing machine may be or include a specialized processor.

As noted above, the processing machine executes the instructions that are stored in the memory or memories to process data. This processing of data may be in response to commands by a user or users of the processing machine, in response to previous processing, in response to a request by another processing machine and/or any other input, for example. The processing machine used to implement the invention may utilize a suitable operating system, and instructions may come directly or indirectly from the operating system.

The processing machine used to implement the invention may be a general-purpose computer. However, the processing machine described above may also utilize any of a wide variety of other technologies including a special purpose computer, a computer system including, for example, a microcomputer, minicomputer or mainframe, a programmed microprocessor, a micro-controller, a peripheral integrated circuit element, a CSIC (Customer Specific Integrated Circuit) or ASIC (Application Specific Integrated Circuit) or other integrated circuit, a logic circuit, a digital signal processor, a programmable logic device such as a FPGA, PLD, PLA or PAL, or any other device or arrangement of devices that is capable of implementing the steps of the processes of the invention.

It is appreciated that in order to practice the method of the invention as described above, it is not necessary that the processors and/or the memories of the processing machine be physically located in the same geographical place. That is, each of the processors and the memories used by the processing machine may be located in geographically distinct locations and connected so as to communicate in any suitable manner. Additionally, it is appreciated that each of the processor and/or the memory may be composed of different physical pieces of equipment. Accordingly, it is not necessary that the processor be one single piece of equipment in one location and that the memory be another single piece of equipment in another location. That is, it is contemplated that the processor may be two pieces of equipment in two different physical locations. The two distinct pieces of equipment may be connected in any suitable manner. Additionally, the memory may include two or more portions of memory in two or more physical locations.

To explain further, processing, as described above, is performed by various components and various memories. However, it is appreciated that the processing performed by two distinct components as described above may, in accordance with a further aspect of the invention, be performed by a single component. Further, the processing performed by one distinct component as described above may be performed by two distinct components. In a similar manner, the memory storage performed by two distinct memory portions as described above may, in accordance with a further aspect of the invention, be performed by a single memory portion. Further, the memory storage performed by one distinct memory portion as described above may be performed by two memory portions.

Further, various technologies may be used to provide communication between the various processors and/or memories, as well as to allow the processors and/or the memories of the invention to communicate with any other entity, i.e., so as to obtain further instructions or to access and use remote memory stores, for example. Such technologies used to provide such communication might include a network, the Internet, Intranet, Extranet, LAN, an Ethernet, wireless communication via cell tower or satellite, or any client server system that provides communication, for example. Such communications technologies may use any suitable protocol such as TCP/IP, UDP, or OSI, for example.

As described above, a set of instructions may be used in the processing of the invention. The set of instructions may be in the form of a program or software. The software may be in the form of system software or application software, for example. The software might also be in the form of a collection of separate programs, a program module within a larger program, or a portion of a program module, for example. The software used might also include modular programming in the form of object-oriented programming. The software tells the processing machine what to do with the data being processed.

Further, it is appreciated that the instructions or set of instructions used in the implementation and operation of the invention may be in a suitable form such that the processing machine may read the instructions. For example, the instructions that form a program may be in the form of a suitable programming language, which is converted to machine language or object code to allow the processor or processors to read the instructions. That is, written lines of programming code or source code, in a particular programming language, are converted to machine language using a compiler, assembler or interpreter. The machine language is binary coded machine instructions that are specific to a particular type of processing machine, i.e., to a particular type of computer, for example. The computer understands the machine language.

Any suitable programming language may be used in accordance with the various aspects of the invention. Illustratively, the programming language used may include assembly language, Ada, APL, Basic, C, C++, COBOL, dBase, Forth, Fortran, Java, Modula-2, Pascal, Prolog, REXX, Visual Basic, and/or JavaScript, for example. Further, it is not necessary that a single type of instruction or single programming language be utilized in conjunction with the operation of the system and method of the invention. Rather, any number of different programming languages may be utilized as is necessary and/or desirable.

Also, the instructions and/or data used in the practice of the invention may utilize any compression or encryption technique or algorithm, as may be desired. An encryption module might be used to encrypt data. Further, files or other data may be decrypted using a suitable decryption module, for example.

As described above, the invention may illustratively be embodied in the form of a processing machine, including a computer or computer system, for example, that includes at least one memory. It is to be appreciated that the set of instructions, i.e., the software for example, that enables the computer operating system to perform the operations described above may be contained on any of a wide variety of media or medium, as desired. Further, the data that is processed by the set of instructions might also be contained on any of a wide variety of media or medium. That is, the particular medium, i.e., the memory in the processing machine, utilized to hold the set of instructions and/or the data used in the invention may take on any of a variety of physical forms or transmissions, for example. Illustratively, the medium may be in the form of a compact disk, a DVD, an integrated circuit, a hard disk, a floppy disk, an optical disk, a magnetic tape, a RAM, a ROM, a PROM, an EPROM, a wire, a cable, a fiber, a communications channel, a satellite transmission, a memory card, a SIM card, or other remote transmission, as well as any other medium or source of data that may be read by a processor.

Further, the memory or memories used in the processing machine that implements the invention may be in any of a wide variety of forms to allow the memory to hold instructions, data, or other information, as is desired. Thus, the memory might be in the form of a database to hold data. The database might use any desired arrangement of files such as a flat file arrangement or a relational database arrangement, for example.

In the system and method of the invention, a variety of "user interfaces" may be utilized to allow a user to interface with the processing machine or machines that are used to implement the invention. As used herein, a user interface includes any hardware, software, or combination of hardware and software used by the processing machine that allows a user to interact with the processing machine. A user interface may be in the form of a dialogue screen for example. A user interface may also include any of a mouse, touch screen, keyboard, keypad, voice reader, voice recognizer, dialogue screen, menu box, list, checkbox, toggle switch, a pushbutton or any other device that allows a user to receive information regarding the operation of the processing machine as it processes a set of instructions and/or provides the processing machine with information. Accordingly, the user interface is any device that provides communication between a user and a processing machine. The information provided by the user to the processing machine through the user interface may be in the form of a command, a selection of data, or some other input, for example.

As discussed above, a user interface is utilized by the processing machine that performs a set of instructions such that the processing machine processes data for a user. The user interface is typically used by the processing machine for interacting with a user either to convey information or receive information from the user. However, it should be appreciated that in accordance with some aspects of the system and method of the invention, it is not necessary that a human user actually interact with a user interface used by the processing machine of the invention. Rather, it is also contemplated that the user interface of the invention might interact, i.e., convey and receive information, with another processing machine, rather than a human user. Accordingly, the other processing machine might be characterized as a user. Further, it is contemplated that a user interface utilized in the system and method of the invention may interact partially with another processing machine or processing machines, while also interacting partially with a human user.

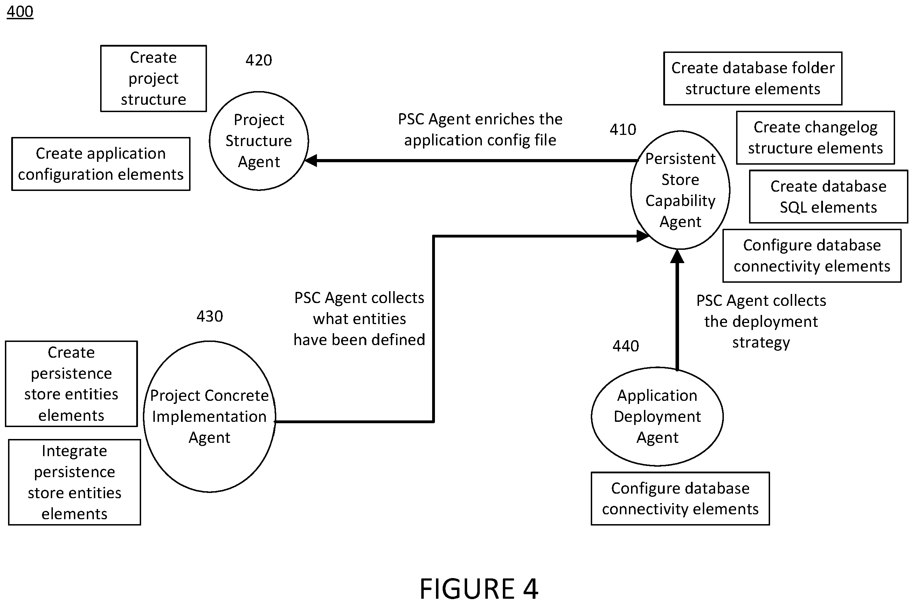

Figure 4 is a block diagram of agents and agent dependencies, in accordance with aspects.

Figure 4 includes a system 400 including persistent store capability agent 410 capable that creates a database folder structure elements, creating changelog structure elements, creating database SQL elements, and/or configuring database connectivity elements. System 400 can include one or more of project structure agent 420, project concrete implementation agent 430, and application deployment agent 440.

Project structure agent 420 creates a project structure and/or creates application configuration elements. Agent 410 can enrich the application configuration file by communicating with project structure agent 420 (e.g., sending configure database connectivity elements to project structure agent 420).

Project concrete implementation agent 420 creates persistence store entities elements and/or integrates persistence store entities elements. Agent 410 can collect identified entities from agent 430 by communicating with project structure agent 430.

Application deployment agent 440 configures database connectivity elements. Agent 410 can collect the determined deployment strategy from agent 440 by communicating with project structure agent 440.

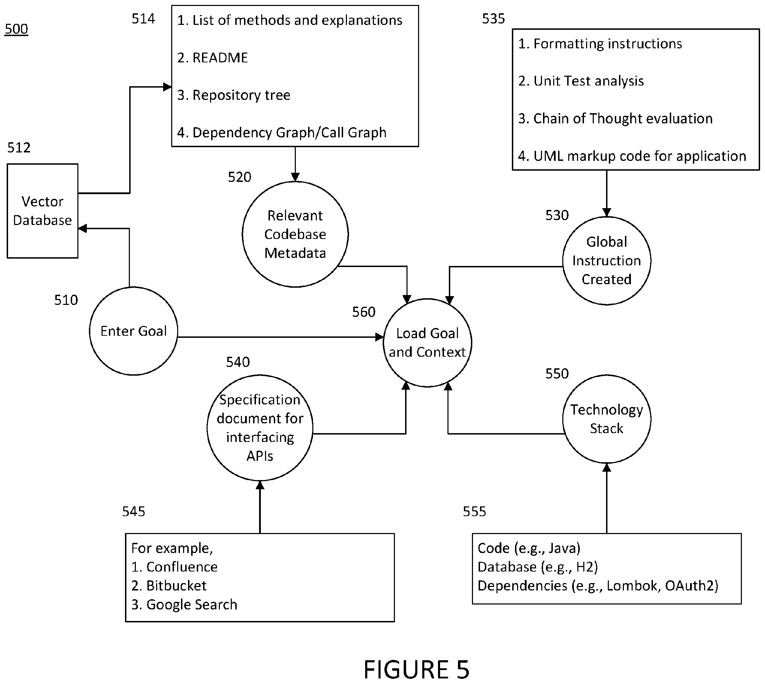

Figure 5 is a block diagram of a system for addition of context to generated source code. In a paradigm of context aware software development, a first goal may be to provide as much context about a desired application as possible in a systematic manner. For system 510, associated with a user interface, a human actor may first enter a goal or a set of high level goals for the desired application, after which a machine learning model (such as an LLM model) may partially take over. The goal may be stored in vector database 512. In a stage of application development that may be referred to as "context generation," enhancement of a model's memory may be performed including as much useful information and dense context as is possible. To this end, a combination of human and model generated text that is kept in a context window may be utilized. In some embodiments, the model can generate the text without human generated text.

In accordance with aspects, system 500 can include one or more of loading a goal and context according to system 560. The goal and context system 560 can also retrieve information from relevant codebase metadata system 514, global instruction creation system 530, specification document for interfacing APIs 540, and/or technology stack system 550.

According to system 514, one or more steps can be taken to access vector database 512 and (1) generate a list of methods and explanations; (2) accessing README files; (3) accessing a repository tree; and/or (4) generating a dependency graph/call graph. The output of system 514 can be provided to relevant codebase metadata 520.

According to system 535, one or more steps can be taken to provide a global instruction to system 530 including one or more of (1) formatting instructions; (2) conducting a unit test analysis; (3) conducting a chain of thought evaluation; and (4) creating a UML markup code for an application.

According to system 545, a specification document can be retrieved for interfacing APIs. The specification document may be parsed for applicable formats. For example, a Confluence, Bitbucket, or Google search specification document can be identified, and then implemented in system 540.

According to system 555, one or more steps can be taken to provide a technology stack to system 550 including one or more of (1) a code style, type, or provider; (2) a database; and (3) a dependency.

In accordance with aspects, and with continued reference to Figure 5, a context may be generated by a model and may include: 1) a list of formatting instructions for the output - so that appropriate parsers can be built; 2) the types of unit tests used for the model to output (Junit, Jmockit, BDD, etc.); 3) the technology stack for the desired application; 4) (optionally) metadata for any relevant repository which has helper methods / functionalities the desired application can inherit; 5) a global structure for the desired application-in some aspects, a ML model may generate this and it may then be stored in a vector database, or (in other aspects) a human actor can provide the model for a desired structure.

It will be readily understood by those persons skilled in the art that the present invention is susceptible to broad utility and application. Many aspects and adaptations of the present invention other than those herein described, as well as many variations, modifications, and equivalent arrangements, will be apparent from or reasonably suggested by the present invention and foregoing description thereof, without departing from the substance or scope of the invention.

Accordingly, while the present invention has been described here in detail in relation to its exemplary aspects, it is to be understood that this disclosure is only illustrative and exemplary of the present invention and is made to provide an enabling disclosure of the invention. Accordingly, the foregoing disclosure is not intended to be construed or to limit the present invention or otherwise to exclude any other such aspects, adaptations, variations, modifications, or equivalent arrangements.

## Claims

1. A method comprising:
receiving, at a generative platform, a project specification;
determining, by the generative platform, one or more contexts from the project specification;
determining, by the generative platform and based on the project specification, a set of tasks;
executing each task in the set of tasks with a corresponding agent, wherein the executing includes:
determining context information;
receiving output from a language model;
enhancing the output from the language model with the context information; and
saving the output to an integrated development environment.

2. The method of claim 1, the determining a set of tasks comprising:
determining a requirement of the project specification;
creating a database schema based on the project specification;
creating a project structure and a dependency;
creating a system interface; and
deploying the system interface to a cloud platform.

3. The method of claim 1, wherein the set of tasks includes one or more of a constraint, a command, a resource, a performance, an evaluation, and a response format.

4. The method of claim 1, wherein the identified task is to create a persistent store and, in response, a persistent store agent creates the persistent store by generating one or more of a configuration, a software object, a service, and a deployment scheme.

5. The method of claim 1, further comprising generating a domain classification scheme that isolates the execution of the set of tasks included in a domain class to a corresponding agent that only executes the domain class.

6. The method of claim 1, wherein a persistence agent is generated to create a persistence tier for the project.

7. The method of claim 1, the corresponding agent is generated with a context of a domain environment in which the corresponding agent operates and a requirement of the domain environment.

8. A system comprising one or more processors and one or more storage devices storing instructions that when executed by one or more processors cause the processor to:
receive, at a generative platform, a project specification;
determine, by the generative platform, one or more contexts from the project specification;
determine, by the generative platform and based on the project specification, a set of tasks;
execute each task in the set of tasks with a corresponding agent, wherein the executing includes:
determine context information;
receive output from a language model;
enhance the output from the language model with the context information; and
save the output to an integrated development environment.

9. The operations of claim 8, the determining a set of tasks comprising:
determining a requirement of the project specification;
creating a database schema based on the project specification;
creating a project structure and a dependency;
creating a system interface; and
deploying the system interface to a cloud platform.

10. The operations of claim 8, wherein the set of tasks includes one or more of a constraint, a command, a resource, a performance, an evaluation, and a response format.

11. The operations of claim 8, wherein the identified task is to create a persistent store and, in response, a persistent store agent creates the persistent store by generating one or more of a configuration, a software object, a service, and a deployment scheme.

12. The operations of claim 8, further comprising generating a domain classification scheme that isolates the execution of the set of tasks included in a domain class to a corresponding agent that only executes the domain class.

13. The operations of claim 8, wherein a persistence agent is generated to create a persistence tier for the project.

14. The operations of claim 8, the corresponding agent is generated with a context of a domain environment in which the corresponding agent operates and a requirement of the domain environment.

15. A computer processing system comprising:
a memory configured to store instructions; and
a hardware processor operatively coupled to the memory for executing the instructions to:
receiving, at a generative platform, a project specification;
determining, by the generative platform, one or more contexts from the project specification;
determining, by the generative platform and based on the project specification, a set of tasks;
executing each task in the set of tasks with a corresponding agent, wherein the executing includes:
determining context information;
receiving output from a language model;
enhancing the output from the language model with the context information; and
saving the output to an integrated development environment.

16. The system of claim 15, the determining a set of tasks comprising:
determining a requirement of the project specification;
creating a database schema based on the project specification;
creating a project structure and a dependency;
creating a system interface; and
deploying the system interface to a cloud platform.

17. The system of claim 15, wherein the set of tasks includes one or more of a constraint, a command, a resource, a performance, an evaluation, and a response format.

18. The system of claim 15, wherein the identified task is to create a persistent store and, in response, a persistent store agent creates the persistent store by generating one or more of a configuration, a software object, a service, and a deployment scheme.

19. The system of claim 15, further comprising generating a domain classification scheme that isolates the execution of the set of tasks included in a domain class to a corresponding agent that only executes the domain class.

20. The system of claim 15, wherein a persistence agent is generated to create a persistence tier for the project.
